# FASCICULE DE BREVET EUROPEEN

(11) **EP 2 788 963 B1**
(45) Date de publication et mention de la délivrance du brevet: **16.03.2016**
(21) Numéro de dépôt: 12805656.1
(22) Date de dépôt: 06.12.2012
(51) Int. Cl.: G08C 17/02, H04L 12/28, E06B 9/00, G08C 19/00, E06B 9/68

(54) **PROCEDE DE FONCTIONNEMENT D'UNE ENTITE D'ALIMENTATION ET DE COMMUNICATION ET D'UN ACTIONNEUR DESTINES A FAIRE PARTIE D'UN SYSTEME DOMOTIQUE**
VERFAHREN ZUM BETREIBEN EINER STROMVERSORGUNGS- UND KOMMUNIKATIONSEINHEIT SOWIE AKTUATOR ZUR INTEGRATION IN EIN HEIMAUTOMATISIERUNGSSYSTEM
OPERATING METHOD OF A POWER SUPPLY AND COMMUNICATION ENTITY AND AN ACTUATOR INTENDED TO BE PART OF A HOME-AUTOMATION SYSTEM

(30) Priorité: 06.12.2011 FR 1161197
(43) Date de publication de la demande: 15.10.2014
(73) Titulaire: Somfy SAS, 74300 Cluses (FR)
(72) Inventeur: DESBIOLLES, Claude, F-74800 Eteaux (FR); GERMAIN, Florian, F-74960 Meythet (FR); MUGNIER, Daniel, F-74190 Passy (FR); RIFFAUD, Stéphane, F-74700 Sallanches (FR); TERRIER, Nicolas, F-74130 Bonneville (FR)
(74) Mandataire: Novaimo
(86) Numéro de dépôt international: PCT/EP2012/074705
(87) Numéro de publication internationale: WO 2013/083728

(56) Documents cités:
- EP-A1- 1 626 154

## Description

### Domaine de l'invention

L'invention concerne le domaine des installations domotiques comprenant des actionneurs électriques pour l'entraînement d'un élément mobile dans un bâtiment, tels que des fermetures ou protections solaires.

Ces actionneurs, en fonctionnement normal sur le site, sont commandés par l'intermédiaire d'une interface radio et/ou d'une interface filaire.

En cours de mise au point, de production, d'assemblage du produit porteur en usine, d'identification et de diagnostic d'un actionneur sur site, il est nécessaire de dialoguer avec l'actionneur, pour transmettre et/ou recevoir des informations telles que date d'assemblage, couple, vitesse, numéro de série, etc.

Ce dialogue est effectué à l'aide d'une entité d'alimentation et de communication capable d'alimenter l'actionneur et de communiquer avec ce dernier.

La communication doit être effectuée de manière à couvrir l'ensemble de la gamme et avec un surcoût minimum.

### Etat de la technique

Des solutions pour réaliser une communication entre un actionneur et une entité d'alimentation et de communication sont connues, par exemple utilisant l'interface filaire pour l'alimentation de l'actionneur et une autre interface, radio, pour la communication. Cette solution présente l'inconvénient de l'utilisation systématique d'une interface radio, qui n'est pas compatible avec tous les actionneurs.

Une autre solution consiste à utiliser deux interfaces filaires dédiées, une pour l'alimentation électrique et une autre pour la communication. Cette solution présente les inconvénients d'un coût et d'un encombrement supplémentaires.

Une autre solution consiste à utiliser seulement l'interface filaire d'alimentation électrique et de superposer les signaux d'alimentation et de communication. Cette solution, connue sous le nom des courants porteurs, nécessite une électronique supplémentaire pour la modulation/ démodulation des signaux qui induit une augmentation du coût.

Une autre solution, divulguée par le brevet EP1274199, utilise seulement l'interface filaire d'alimentation électrique et, pour communiquer, l'entité d'alimentation et de communication interrompt l'alimentation de manière synchronisée avec le secteur. Cette solution, présente l'inconvénient d'un débit lent, dû à la synchronisation sur le réseau électrique et d'une qualité du signal tributaire de la qualité du réseau.

Une autre solution est divulguée par le brevet EP1626154.

Pour envoyer des informations à l'entité d'alimentation et de communication, l'actionneur peut répondre par un mouvement dans un sens, dans l'autre sens ou une succession de mouvements. Le retour d'information donné par l'actionneur est d'un débit très faible, d'environ 1 bit/s.

### Problème

Le but de l'invention est de fournir un procédé de fonctionnement d'une entité d'alimentation et de communication, d'un actionneur, et d'un système comprenant ces éléments, remédiant aux inconvénients mentionnés et améliorant les procédés connus de l'art antérieur. En particulier, l'invention propose un procédé simple, fiable et peu coûteux tout en permettant un débit de données important.

### Définitions

Dans la suite de ce document, les termes suivants seront utilisés :
Actionneur : actionneur domotique comprenant un moteur électrique pour entraîner un élément mobile dans un bâtiment.
Entité d'alimentation et de communication : entité fournissant ou réceptionnant des informations de l'actionneur ; cette entité fournit également l'alimentation électrique à l'actionneur.
Communication descendante (ou downlink en anglais) : émission par l'entité d'alimentation et de communication et réception par l'actionneur.
Communication montante (ou uplink en anglais) : émission par l'actionneur et réception par l'entité d'alimentation et de communication.
Communication : communication descendante et/ou montante.
Forme d'onde : une représentation temporelle des variations caractéristiques d'un signal, telles que l'amplitude, la fréquence, la phase.
Mode communication : mode de fonctionnement dans lequel les éléments du système domotique, l'actionneur et l'entité d'alimentation et de communication, peuvent effectuer une communication descendante et/ou montante.
Mode exécution de commande : mode de fonctionnement dans lequel les éléments du système domotique, l'actionneur et l'entité d'alimentation et de communication, permettent l'exécution des commandes par l'actionneur, notamment par l'activation du moteur.
Système domotique : système comprenant une entité d'alimentation et de communication, au moins un actionneur et des moyens de connexion électrique et de communication entre cette entité et cet actionneur.

Selon un premier aspect, l'invention concerne un procédé de fonctionnement d'une entité d'alimentation et de communication, respectivement d'un actionneur domotique comprenant un moteur électrique pour entraîner un élément mobile dans un bâtiment dans un système domotique.

L'invention concerne aussi un procédé de fonctionnement d'un système comprenant une entité d'alimentation et de communication et au moins un actionneur domotique comprenant un moteur électrique d'entraînement d'un élément mobile dans un bâtiment, le procédé de fonctionnement comprenant au moins deux modes de fonctionnement mutuellement exclusifs, un mode d'exécution de commande et un mode de communication, à chaque mode de fonctionnement correspondant un signal d'alimentation spécifique. Ce procédé comprend les étapes suivantes :
- choix d'un mode fonctionnement par l'entité d'alimentation et de communication et de génération du signal d'alimentation spécifique au mode de fonctionnement choisi;
- détermination par l'actionneur d'au moins une caractéristique du signal d'alimentation spécifique au mode de fonctionnement choisi et de comparaison ce cette caractéristique avec les caractéristiques des signaux spécifiques à chaque mode de fonctionnement ; et
- mise en oeuvre, par l'entité d'alimentation et de communication, respectivement par l'actionneur, du mode de fonctionnement choisi."

L'entité d'alimentation et de communication et l'actionneur comportent des bornes électriques liées par deux fils aptes à connecter l'actionneur à une alimentation électrique générée par l'entité d'alimentation et de communication, et à constituer un support physique de communication entre l'actionneur et l'entité d'alimentation et de communication.

Le procédé régit le fonctionnement d'une entité d'alimentation et de communication destinée à faire partie d'un système avec au moins un actionneur domotique comprenant un moteur électrique d'entraînement d'un élément mobile dans un bâtiment. L'entité d'alimentation et de communication comprend deux bornes électriques de liaison à l'actionneur permettant d'alimenter l'actionneur et permettant la communication entre l'actionneur et l'entité d'alimentation et de communication. Le procédé comprend deux modes de fonctionnement mutuellement exclusifs, un mode d'exécution de commande et un mode de communication, à chaque mode de fonctionnement correspondant un signal d'alimentation spécifique. Le procédé comprend les étapes :
- choix d'un mode de fonctionnement,
- génération entre les bornes d'un signal d'alimentation spécifique au mode de fonctionnement choisi.

Le signal d'alimentation spécifique au mode exécution de commande peut être une tension alternative et le signal d'alimentation spécifique au mode communication peut être une tension continue.

Le signal d'alimentation spécifique au mode exécution de commande peut être une tension continue ayant une première valeur et le signal d'alimentation spécifique au mode de communication peut être une tension continue ayant une deuxième valeur différente.

En mode de fonctionnement de communication descendante, le procédé peut comprendre en outre une étape d'émission de données sous la forme d'une succession d'éléments binaires, chaque élément binaire étant représenté par la forme d'onde du signal d'alimentation et comprenant
- un préambule constitué par une tension continue ayant une troisième valeur, puis
- un signal spécifique à chaque élément binaire, puis
- un postambule constitué par une tension continue ayant une quatrième valeur différente de la troisième valeur.

Le procédé peut comprendre en outre une étape de détection de configuration de l'actionneur pour le mode de fonctionnement choisi préalablement à l'étape d'émission de données.

Le procédé peut comprendre en outre une étape de transition entre le mode exécution de commande et le mode de communication consistant à générer sur les bornes un premier signal d'alimentation de transition de forme d'onde et d'amplitude prédéfinies.

Le procédé peut comprendre en outre une étape de transition entre le mode de communication et le mode exécution de commande consistant à générer sur les bornes un deuxième signal d'alimentation de transition de forme d'onde et d'amplitude prédéfinies.

Le procédé peut comprendre :
- générer une variation d'un premier type du signal d'alimentation spécifique,
- générer une variation d'un deuxième type du signal d'alimentation spécifique,
- analyser une caractéristique d'un signal de réponse suite à la variation du deuxième type,
- déduire de l'étape d'analyse précédente, une donnée associée à la caractéristique.

Deux variations de premier et deuxième type peuvent se compenser.

Le signal d'alimentation spécifique peut comprendre des itérations de successions :
- d'une tension continue ayant une cinquième valeur, et
- d'une tension continue ayant une sixième valeur,
la variation de premier type permettant de passer de la cinquième valeur à la sixième valeur, et
la variation de deuxième type permettant de passer de la sixième valeur à la cinquième valeur.

Le procédé régit le fonctionnement d'un actionneur domotique comprenant un moteur électrique d'entraînement d'un élément mobile dans un bâtiment, l'actionneur étant apte à faire partie d'un système avec une entité d'alimentation et de communication, l'actionneur comprenant deux bornes électriques de liaison à l'entité d'alimentation et de communication permettant d'alimenter l'actionneur et permettant la communication entre l'actionneur et l'entité d'alimentation et de communication. Le procédé comprend deux modes de fonctionnement mutuellement exclusifs, un mode d'exécution de commande et un mode de communication, à chaque mode de fonctionnement correspondant un signal d'alimentation spécifique. Le procédé comprend les étapes :
- détermination d'au moins une caractéristique du signal d'alimentation ; et
- comparaison de la caractéristique du signal d'alimentation avec les caractéristiques des signaux d'alimentation spécifiques à chaque mode de fonctionnement.

Le procédé peut comprendre en outre une étape de détermination du mode de fonctionnement du système et une étape de configuration de l'actionneur pour le mode de fonctionnement déterminé.

L'étape de configuration de l'actionneur pour le mode de fonctionnement choisi peut comprendre une sous-étape de configuration de l'impédance de l'actionneur.

Dans un mode de communication montante, le procédé peut comprendre en outre une étape d'émission d'une information par l'actionneur dans laquelle l'actionneur effectue au moins une modification de son impédance vue de ses bornes électriques.

Dans un mode de fonctionnement de communication descendante, le procédé peut comprendre en outre une étape de réception de données sous la forme d'une succession d'éléments binaires, chaque élément binaire étant représenté par la forme d'onde du signal d'alimentation et comprenant
- un préambule constitué par une tension continue ayant une troisième valeur puis ;
- un signal spécifique à chaque élément binaire ; puis
- un postambule constitué par une tension continue ayant une quatrième valeur, différente de la troisième valeur.

Dans un mode de fonctionnement de communication montante, le procédé peut comprendre :
- détecter une variation d'un premier type du signal d'alimentation spécifique,
- mettre en place une première configuration d'au moins un élément définissant une première impédance interne à un circuit de l'actionneur et associée à une première donnée ou mettre en place une deuxième configuration de l'au moins un élément définissant une deuxième impédance interne au circuit de l'actionneur et associée à une deuxième donnée,
- maintenir la situation configurée à l'étape précédente pendant une durée déterminée.

A l'issue de la durée déterminée, on peut mettre en place la première configuration de l'au moins un élément.

L'au moins un élément peut comprendre un interrupteur, notamment un interrupteur en série avec un élément résistif, en particulier un ensemble comprenant un interrupteur en série avec un élément résistif, le tout en parallèle d'un condensateur.

L'interrupteur peut être ouvert pour définir la première configuration.

Suite à l'étape de détection de la variation du premier type, on peut découpler le circuit des bornes électriques, notamment par activation d'un élément de découplage.

Suite à une étape de détection d'une variation d'un deuxième type du signal d'alimentation spécifique, on peut coupler le circuit aux bornes électriques, notamment par désactivation d'un élément de découplage.

Le procédé régit le fonctionnement d'un système comprenant une entité d'alimentation et de communication et au moins un actionneur domotique comprenant un moteur électrique d'entraînement d'un élément mobile dans un bâtiment. Le procédé de fonctionnement comprend au moins deux modes de fonctionnement mutuellement exclusifs, un mode d'exécution de commande et un mode de communication, à chaque mode de fonctionnement correspondant un signal d'alimentation spécifique. Le procédé comprend les étapes :
- choix d'un mode fonctionnement par l'entité d'alimentation et de communication et de génération du signal d'alimentation spécifique au mode de fonctionnement choisi;
- détermination par l'actionneur d'au moins une caractéristique du signal d'alimentation spécifique au mode de fonctionnement choisi et de comparaison de cette caractéristique avec les caractéristiques des signaux spécifiques à chaque mode de fonctionnement ; et
- mise en oeuvre, par l'entité d'alimentation et de communication, et/ou par l'actionneur, du mode de fonctionnement choisi.

Une entité d'alimentation et de communication est destinée à faire partie d'un système, avec au moins un actionneur domotique comprenant un moteur électrique d'entraînement d'un élément mobile dans un bâtiment. L'entité d'alimentation et de communication comprend :
- deux bornes électriques permettant d'alimenter l'actionneur et permettant la communication entre l'actionneur et l'entité d'alimentation et de communication; et
- des moyens :
   - de mise en oeuvre d'au moins deux modes de fonctionnement mutuellement exclusifs, un mode d'exécution de commande et un mode de communication, à chaque mode de fonctionnement correspondant un signal d'alimentation spécifique ;
   - de choix d'un mode de fonctionnement ;
   - de génération entre les bornes électriques d'un signal d'alimentation spécifique au mode de fonctionnement choisi.

L'invention porte aussi sur un support d'enregistrement lisible par un processeur sur lequel est enregistré un programme d'ordinateur comprenant des instructions adaptés à l'exécution des étapes du procédé de fonctionnement d'une entité d'alimentation et de communication défini précédemment.

Un actionneur domotique comprend un moteur électrique d'entraînement d'un élément mobile dans un bâtiment. L'actionneur est apte à être utilisé dans un système, avec une entité d'alimentation et de communication. L'actionneur comprend :
- deux bornes électriques de liaison à l'entité d'alimentation et de communication permettant d'alimenter l'actionneur et permettant la communication entre l'actionneur et l'entité d'alimentation et de communication ;
- des moyens
   - de mise en oeuvre d'au moins deux modes de fonctionnement mutuellement exclusifs, un mode d'exécution de commande et un mode de communication, à chaque mode de fonctionnement correspondant un signal d'alimentation spécifique ; et
   - de détermination d'au moins une caractéristique du signal d'alimentation ; et
   - de comparaison de la caractéristique du signal d'alimentation avec les caractéristiques des signaux d'alimentation spécifiques à chaque mode de fonctionnement.

L'actionneur peut comprendre des moyens de détermination du mode de fonctionnement du système et des moyens de mise en configuration pour le mode de fonctionnement déterminé.

L'invention porte aussi sur un support d'enregistrement lisible par un processeur sur lequel est enregistré un programme d'ordinateur comprenant des instructions adaptés à l'exécution des étapes du procédé de fonctionnement d'un actionneur défini précédemment.

Selon l'invention, un système comprend au moins une entité d'alimentation et de communication définie précédemment et au moins un actionneur défini précédemment.

Dans un mode particulier de réalisation de l'invention, le procédé mis en oeuvre par l'entité d'alimentation et de communication, respectivement l'actionneur, la tension d'alimentation spécifique au mode exécution de commande est une tension alternative, par exemple fournie par le réseau commercial de distribution et la tension d'alimentation spécifique au mode communication descendante et/ou montante est une tension continue.

Dans un autre mode particulier de réalisation de l'invention, le procédé mis en oeuvre par l'entité d'alimentation et de communication, respectivement l'actionneur, la tension d'alimentation spécifique au mode exécution de commande est une tension continue ayant une première valeur et la tension d'alimentation spécifique au mode de communication descendante et/ou montante est une tension continue ayant une deuxième valeur, différente de la première.

Si le mode de fonctionnement choisi est un mode de communication descendante, le procédé comprend une étape d'émission de données par l'entité d'alimentation et de communication sous la forme d'une succession d'éléments binaires, chaque élément binaire étant représenté par la forme d'onde de la tension d'alimentation et comprenant
- un préambule constitué par une tension continue ayant une troisième valeur ;
- un signal spécifique à chaque élément binaire ;
- un postambule constitué par une tension continue ayant une quatrième valeur différente de la troisième valeur.

Avantageusement, quelque soit la succession des bits dans un octet, des transitions ont lieu grâce aux valeurs différentes de la tension pour le postambule et le préambule. Les successions dans le temps de ces transitions permettent la communication entre l'entité d'alimentation et de communication et l'actionneur sans qu'il soit nécessaire de synchroniser ceux-ci. Les valeurs de la tension d'alimentation pour le préambule et le postambule peuvent prendre une des valeurs spécifiques à un mode de fonctionnement, la seule contrainte étant d'avoir des valeurs différentes entre le postambule et le préambule.

Préférentiellement les deux valeurs sont différentes de 0V. De cette manière, quelles que soient les valeurs des éléments binaires transmis et la durée de la transmission, l'entité d'alimentation et de communication peut remplir sa fonction d'alimentation électrique.

Le procédé mis en oeuvre par l'entité d'alimentation et de communication peut comprendre une étape de transition entre le mode exécution de commande et le mode de communication consistant à générer entre ses bornes électriques un premier signal d'alimentation de transition, de forme d'onde et d'amplitude prédéfinies.

Ce mode de réalisation permet d'assurer des conditions initiales optimisées pour le mode de fonctionnement communication.

La valeur de cette tension de transition peut être égale à 0 V pendant une durée prédéterminée, assurant ainsi la décharge des condensateurs de protection et découplage.

Dans un mode préféré de réalisation, le procédé mis en oeuvre par l'entité d'alimentation et de communication comprend en outre une étape de transition entre et le mode de communication et le mode exécution de commande consistant à générer entre ses bornes électriques un deuxième signal d'alimentation de transition, de forme d'onde prédéfinie.

Ce mode de réalisation présente l'avantage d'assurer des conditions initiales optimisées pour le mode exécution de commande.

Dans un mode particulier de réalisation, le procédé mis en oeuvre par l'entité d'alimentation et de communication comprend en outre une étape de détection de configuration de l'actionneur pour le mode de fonctionnement choisi préalable à l'étape d'émission de données.

De cette manière, en mode communication descendante, l'entité d'alimentation et de communication ne commence pas à émettre tant que l'actionneur n'est pas configuré correctement, pour éviter des répétitions.

Dans un mode particulier de réalisation, le procédé mis en oeuvre par l'actionneur comprend en outre une étape de détermination du mode de fonctionnement du système et une étape de configuration de l'actionneur pour le mode de fonctionnement déterminé.

L'actionneur peut, suite à cette détection, assurer les conditions initiales nécessaires au mode de fonctionnement choisi, par exemple l'initialisation du module logiciel de communication.

Dans un mode préféré de réalisation, l'étape de configuration de l'actionneur pour le mode de fonctionnement choisi comprend une sous-étape de configuration de l'impédance de l'actionneur.

Cette solution présente l'avantage d'utiliser l'électronique déjà existante dans l'actionneur pour implémenter une nouvelle fonction, en configurant le moteur en tant que impédance de charge. A noter que cette solution n'induit pas de coût supplémentaire et que la modification d'impédance peut être détectable par l'entité d'alimentation et de communication.

D'autres caractéristiques de l'invention seront comprises à l'aide des figures qui illustrent des exemples de réalisations dépourvus de tout caractère limitatif.
La figure 1 représente un système domotique dans lequel l'invention peut être mise en oeuvre.
Les figures 2 et 2a représentent deux séquences de fonctionnement d'un système mettant en oeuvre l'invention, en illustrant des échanges entre l'entité d'alimentation et de communication IMS et l'actionneur ACT.
La figure 3 représente, sous forme d'organigramme, un mode particulier de réalisation du procédé mis en oeuvre par une entité d'alimentation et de communication IMS conforme à l'invention, lors d'une communication descendante.
La figure 4 représente, sous forme d'organigramme, un mode particulier de réalisation du procédé mis en oeuvre par un actionneur ACT conforme à l'invention, lors d'une communication descendante.
Les figures 5a et 5b représentent des séquences de données dans le mode communication descendante.
Les figures 6a et 6b représentent des exemples d'actionneurs pouvant mettre en oeuvre l'invention.
La figure 7 représente des exemples d'une tension d'alimentation correspondant successivement aux différents modes de fonctionnement.
La figure 8 représente une suite de variations temporelles du signal utilisé pour la communication montante.
La figure 9 représente un schéma d'un actionneur apte à la mise en oeuvre d'un mode particulier de communication montante.
Les figures 10 à 12 décrivent des chronogrammes illustrant trois variantes d'un mode de communication montante particulier.

### Description détaillée d'un mode de réalisation préféré

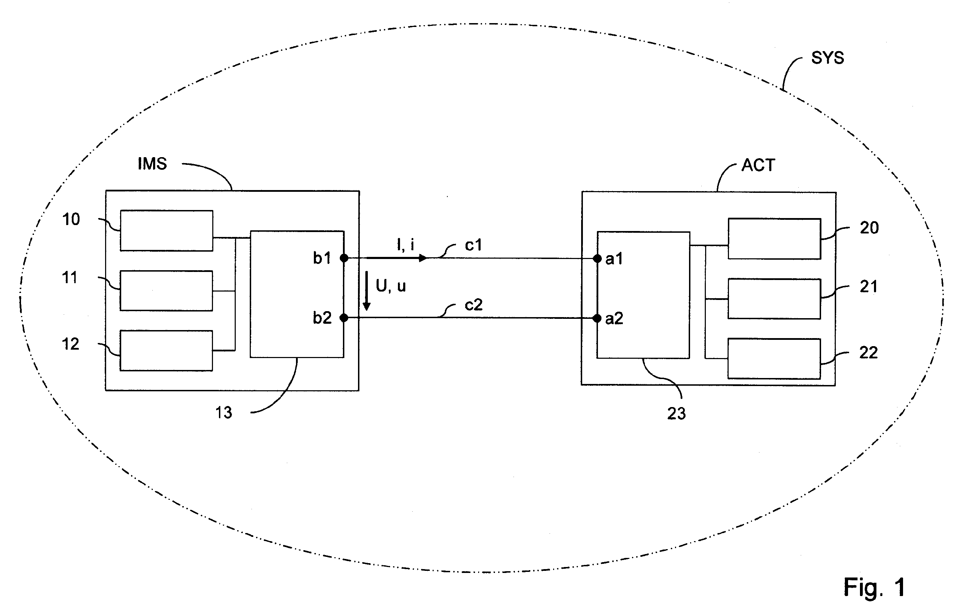

Sur la figure 1, on a représenté un système domotique comprenant une entité d'alimentation et de communication IMS comprenant un processeur 10, une mémoire vive de type RAM 11, une mémoire programme non volatile, éventuellement réinscriptible, de type ROM ou flash 12 et une interface ligne 13 permettant d'alimenter l'actionneur ACT et de communiquer avec ce dernier par l'intermédiaire des deux bornes électriques b1, b2.

Sur la figure 1 est également représenté un actionneur ACT comprenant un processeur 20, une mémoire vive de type RAM 21, une mémoire programme non volatile, éventuellement réinscriptible, de type ROM ou flash 22 et une interface ligne 23 pour recevoir la tension d'alimentation et communiquer avec l'entité d'alimentation et de communication IMS par l'intermédiaire des deux bornes électriques a1, a2. L'actionneur est de préférence un actionneur domotique. Il comprend un moteur électrique d'entraînement d'un élément mobile d'un bâtiment, comme un élément mobile de fermeture, d'occultation, de protection solaire ou d'écran.

Les interfaces lignes 13 et 23 sont connectées par deux fils c1, c2 aptes à connecter l'actionneur ACT à une alimentation électrique générée par l'entité d'alimentation et de communication IMS et à constituer un support physique de communication entre l'actionneur ACT et l'entité d'alimentation et de communication IMS.

L'entité d'alimentation et de communication IMS, l'actionneur ACT et le système SYS comprenant ces éléments mettent en oeuvre au moins deux modes de fonctionnement mutuellement exclusifs, un mode exécution de commande MODE_EXEC et un mode communication descendante (ou downlink) MODE_COMd, et/ou montante (ou uplink) MODE_COMu.

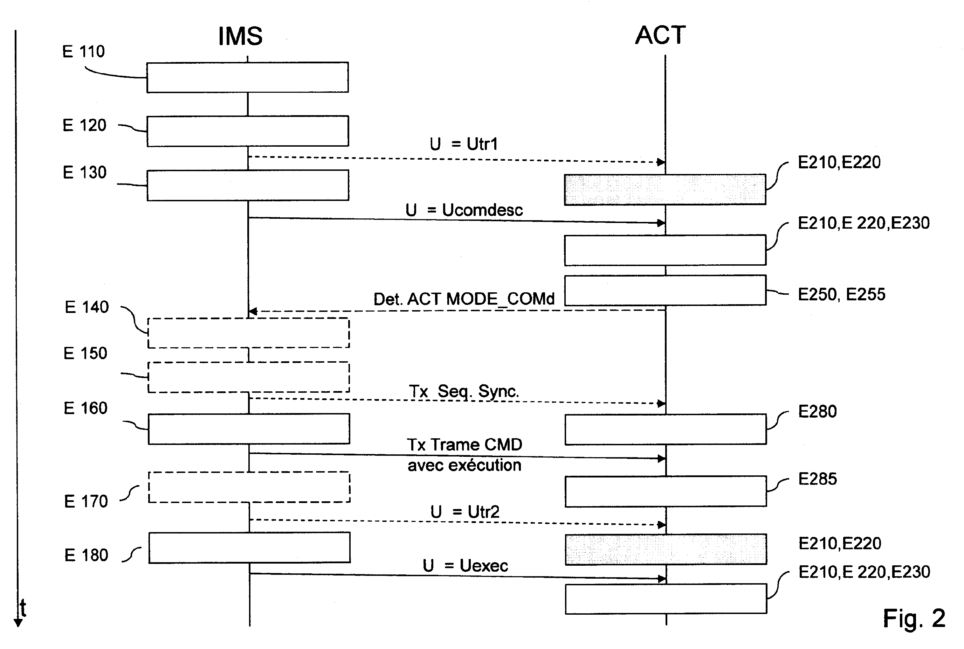

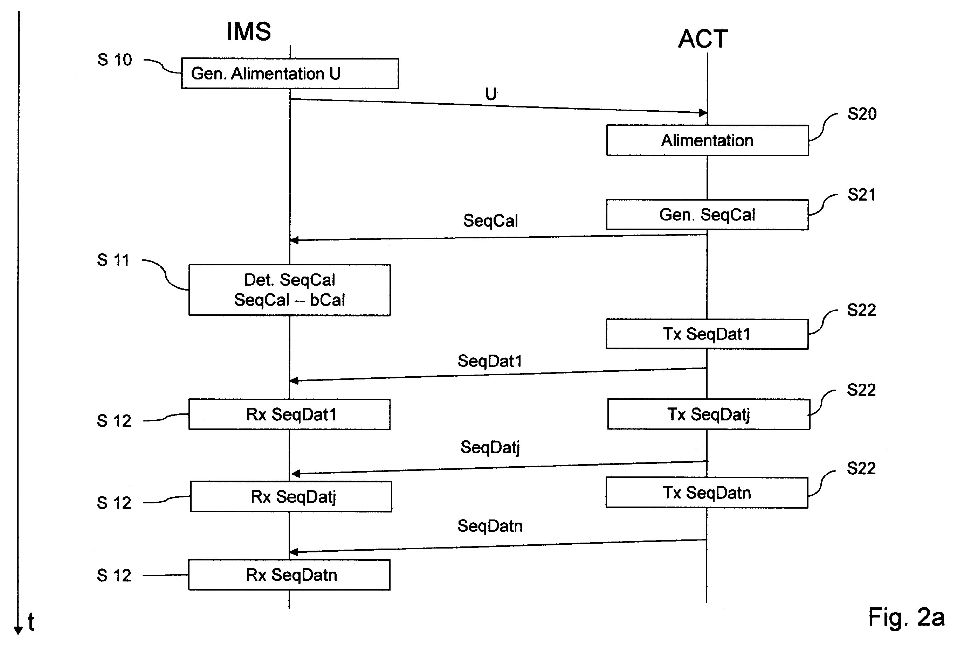

Un mode de réalisation du procédé de fonctionnement mis en oeuvre par l'entité d'alimentation et de communication IMS, est décrit en référence aux figures 2, 3 et 7.

L'entité d'alimentation et de communication IMS choisit un mode fonctionnement dans une étape E110. Ce choix du mode fonctionnement peut être fait, par exemple :
- suite à un ordre envoyé par un ordinateur: l'entité d'alimentation et de communication IMS étant connectée à cet ordinateur par une liaison de type connu, comme Ethernet ; l'ordinateur peut alors envoyer à l'entité d'alimentation et de communication IMS l'ordre de choisir un mode de fonctionnement et lui communiquer les paramètres à utiliser ;
- suite à l'action d'un opérateur, l'entité d'alimentation et de communication IMS pouvant comporter une Interface Homme-Machine ;
- par l'exécution d'un logiciel (SW) embarqué dans l'entité d'alimentation et de communication IMS ;
- suite à une trame envoyée préalablement par l'entité d'alimentation et de communication IMS, utilisant le mode communication descendante MODE_COMd :
   - si la trame transporte une commande nécessitant une exécution, le mode de fonctionnement choisi sera le mode exécution de commande MODE_EXEC ;
   - si la trame transporte un message qui doit être suivi d'une réponse envoyée par l'actionneur ACT, le mode de fonctionnement choisi sera le mode communication montante MODE_COMu.

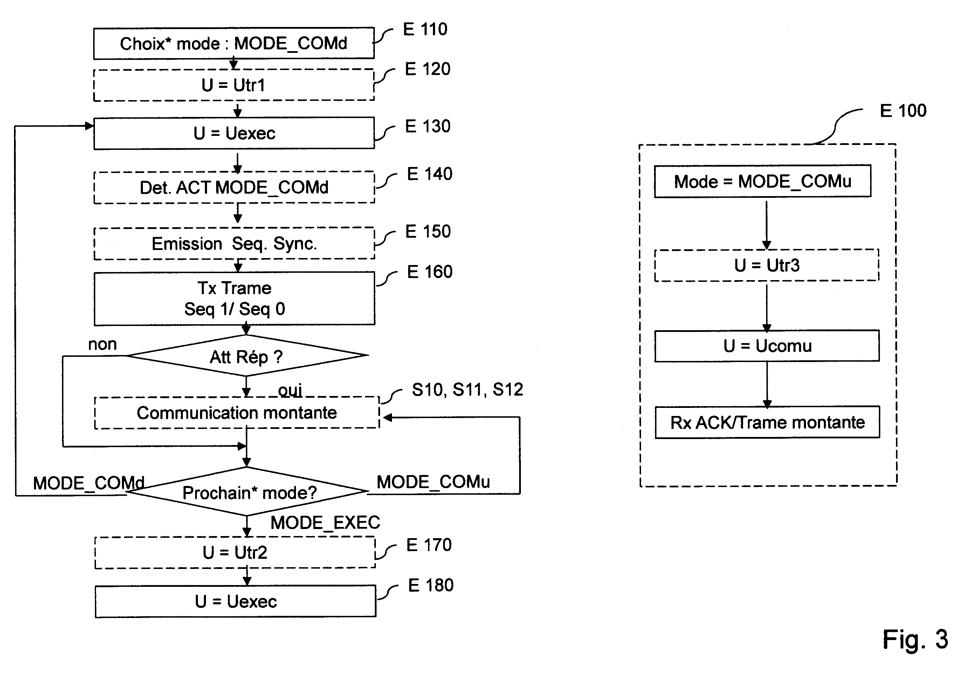

Dans l'exemple décrit par la figure 3, le mode de fonctionnement choisi est le mode communication descendante MODE_COMd. Pour assurer des conditions initiales de fonctionnement optimisées, l'entité d'alimentation et de communication IMS, génère, au cours d'une étape optionnelle de transition E120, un premier signal d'alimentation de transition Utr1 entre les fils c1 et c2, dont la forme d'onde est prédéfinie.

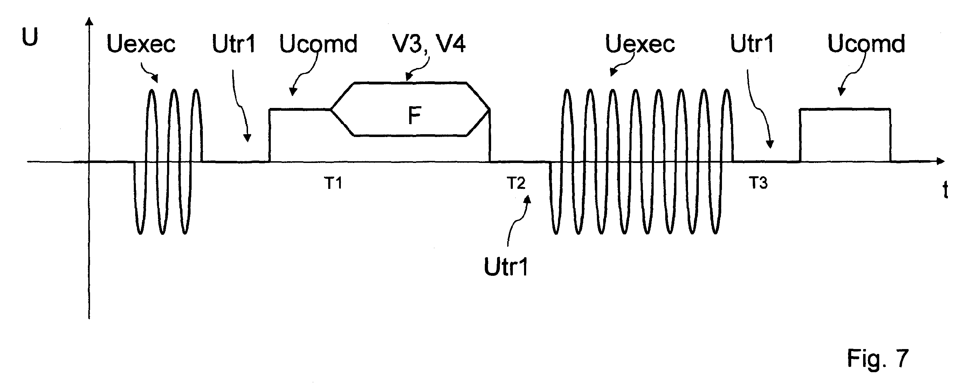

Comme illustré par la figure 7, le premier signal d'alimentation transitoire Utr1 peut être une tension égale à 0V pendant une durée prédéterminée, permettant ainsi la décharge de condensateurs se trouvant au niveau de l'actionneur et l'établissement de conditions matérielles initiales optimisées pour l'actionneur ACT.

Un exemple d'une telle tension Utr1 est illustré par la figure 7 : à la fin de l'alimentation en tension alternative correspondant au mode exécution de commande, la tension d'alimentation est maintenue à 0V pendant une durée T3, permettant ainsi l'établissement des conditions initiales optimisées pour le mode de fonctionnement suivant.

Alternativement, l'entité d'alimentation et de communication IMS peut interrompre l'alimentation, par ouverture des relais.

Ensuite, au cours d'une étape E130, l'unité de commande IMS génère sur les fils c1, c2, une tension d'alimentation Uexec, Ucomd, Ucomu spécifique respectivement à chaque mode de fonctionnement MODE_EXEC, MODE_COMu.

Cette tension d'alimentation spécifique est caractérisée par sa forme d'onde.

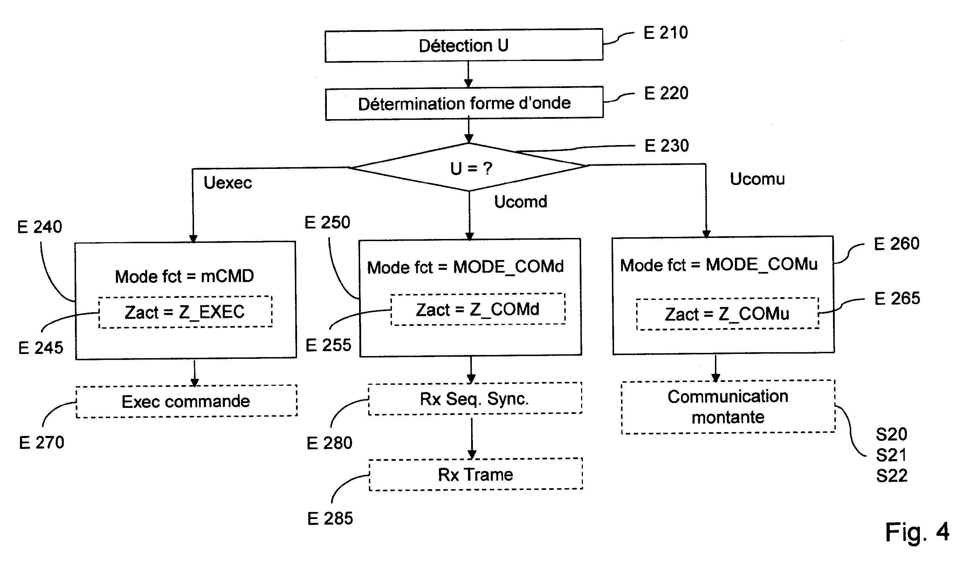

Parallèlement, un mode de réalisation d'un procédé de fonctionnement mis en oeuvre par l'actionneur ACT est décrit en référence aux figures 2, 4 et 7.

L'actionneur ACT est apte à détecter, au cours d'une étape E210, la tension d'alimentation fournie par l'entité d'alimentation et de communication IMS sur les fils c1, c2; l'actionneur, utilisant des techniques connues d'échantillonnage et mémorisation, détermine, au cours d'une étape E220, la forme d'onde et/ou l'amplitude du signal d'alimentation et compare, au cours d'une étape E230, le signal d'alimentation détecté avec des tensions d'alimentation Uexec, Ucomd, Ucomu, respectivement avec des courants d'alimentation lexec, Icomd, Icomu spécifiques à chaque mode de fonctionnement MODE_EXEC, MODE_COMu, pour déduire le mode de fonctionnement choisi par l'entité d'alimentation et de communication.

Dans un mode de réalisation illustré par la figure 7, le signal d'alimentation spécifique au mode exécution de commande Uexec est une tension alternative, par exemple fournie par le réseau de distribution d'électricité ; la tension d'alimentation peut présenter plusieurs amplitudes et fréquences, selon le réseau utilisé.

Dans ce mode de réalisation le signal d'alimentation spécifique au mode communication montante Ucomd et/ou descendante, Ucomu est une tension continue. Les amplitudes de ces tensions d'alimentation peuvent être égales ou différentes, une indication supplémentaire étant fournie dans ce dernier cas à l'actionneur ACT.

Alternativement, le signal d'alimentation spécifique au mode exécution de commande Uexec est une tension continue ayant une première valeur V1. Le signal d'alimentation spécifique au mode de communication Ucomd, respectivement Ucomu, est une tension continue ayant une valeur V2, respectivement V3, différente de la première valeur V1. Les amplitudes de ces tensions d'alimentation V2, V3 en mode communication peuvent être égales ou différentes, une indication supplémentaire étant fournie dans ce dernier cas à l'actionneur ACT.

Dans un mode préféré de réalisation, si le mode de fonctionnement choisi est un mode de communication descendante le procédé mis en oeuvre par l'actionneur ACT peut comprendre une étape E240, E250, E260 de détermination du mode de fonctionnement du système et de configuration de l'actionneur ACT pour le mode de fonctionnement déterminé MODE_EXEC, MODE_COMu.

L'étape E240, E250, E260 de configuration de l'actionneur ACT pour le mode de fonctionnement choisi MODE_EXEC, MODE_COMu peut également comprendre une sous-étape E245, E255, E265 de configuration de l'impédance Zact de l'actionneur ACT.

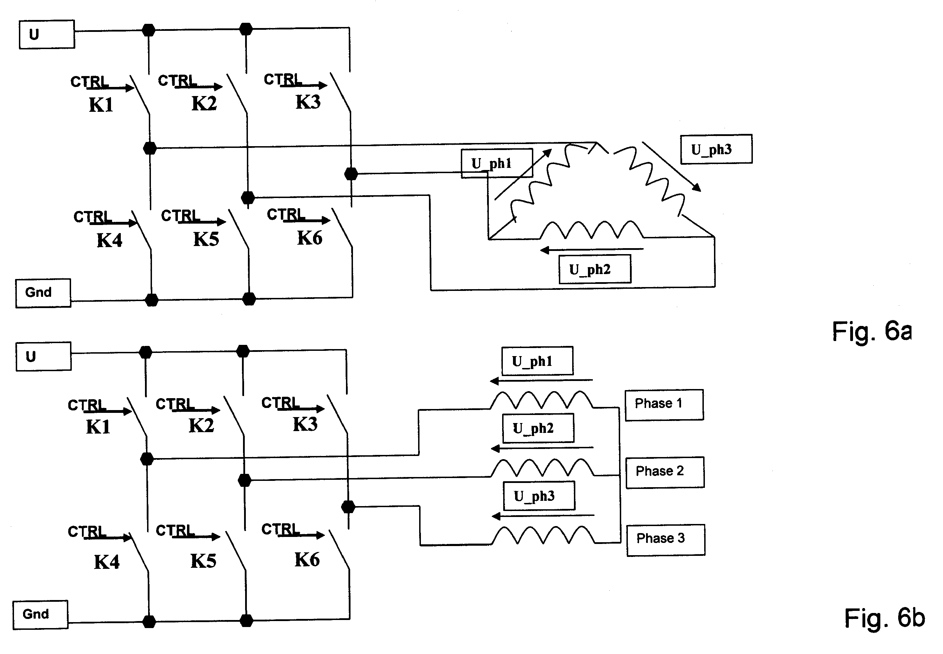

L'invention peut être mise en oeuvre en utilisant un actionneur comprenant un moteur connu par l'homme du métier sous le nom de moteur de type « sans balai » (ou « Brushless » en anglais). Deux types d'un moteur «sans balai » sont représentés schématiquement dans les figures 6a et 6b.

La commande de ces moteurs en fonctionnement normal est assurée par les commutateurs électroniques K1, K2, K3, K4, K5 et K6, réalisés par exemple utilisant des transistors MOS, sous le pilotage d'un module CTRL non représenté. Ce mode de fonctionnement normal du moteur correspond au mode exécution de commande au sens de l'invention.

En mode communication montante et/ou descendante, le module de commande CTRL peut configurer les commutateurs K1, K2, K3, K4, K5 et K6 de manière différente ; dans ce cas l'impédance de charge présentée par le moteur de l'actionneur ACT varie en fonction du mode de fonctionnement choisi par l'entité d'alimentation et de communication IMS et détecté par l'actionneur ACT au cours des étapes E110, respectivement E240, E250, E260.

Dans un mode de réalisation, le procédé mis en oeuvre par l'entité d'alimentation et de communication IMS comprend en outre une étape E140 de détection de configuration de l'actionneur ACT pour le mode de fonctionnement choisi, MODE_EXEC, MODE_COMu. En effet, l'entité d'alimentation et de communication IMS a des moyens pour générer un signal d'alimentation spécifique pour chaque mode de fonctionnement. Si le signal d'alimentation généré est une tension, l'entité d'alimentation et de communication IMS peut comporter des moyens de détection de courant ; alternativement, si le signal d'alimentation généré est un courant, l'entité d'alimentation et de communication IMS peut comporter des moyens de détection de tension. L'entité d'alimentation et de communication IMS peut ainsi déterminer l'impédance de charge présentée par le moteur de l'actionneur ACT et déduire le mode de fonctionnement pour lequel l'actionneur ACT est configuré.

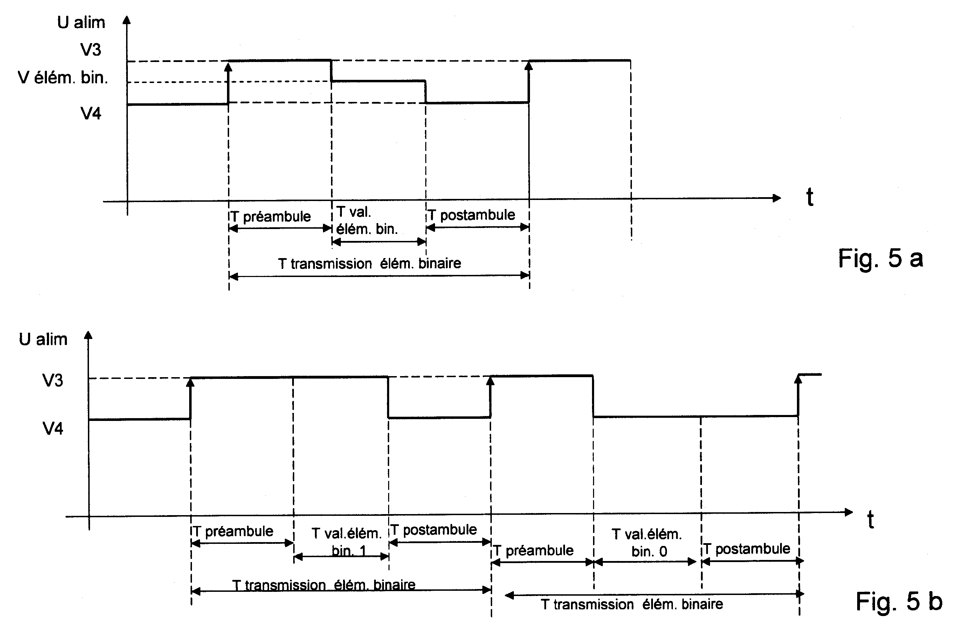

Dans un mode de réalisation illustré par les figures 3, 5a et 5b le mode de fonctionnement choisi est le mode de communication descendante MODE_COMd. Le procédé mis en oeuvre par l'entité d'alimentation et de communication IMS comprend une étape E160 d'émission de données sous la forme d'une succession d'éléments binaires, chaque élément binaire étant représenté par une forme d'onde spécifique de la tension d'alimentation. Cette forme d'onde spécifique comprend
- un préambule constitué par une tension continue ayant une troisième valeur V3 ;
- un signal spécifique à chaque élément binaire ;
- un postambule constitué par une tension continue ayant une quatrième valeur V4 différente de la troisième valeur V3.

Dans ce mode de réalisation, le procédé de fonctionnement mis en oeuvre par l'actionneur ACT comprend une étape E285 de réception de données sous la forme d'une succession d'éléments binaires, chaque élément binaire étant représenté par la forme d'onde de la tension d'alimentation et comprenant
- le préambule constitué par la tension continue ayant la troisième valeur V3 ;
- le signal spécifique à chaque élément binaire ;
- le postambule constitué par la tension continue ayant la quatrième valeur V4 différente de la troisième valeur V3.

Ces valeurs de la tension d'alimentation électrique V3, V4, ont pour contrainte d'avoir des valeurs différentes, de manière à assurer à chaque transmission d'un élément binaire des transitions entre le postambule de l'élément binaire transmis et le préambule de l'élément binaire suivant.

Dans le mode de réalisation illustré par la figure 5b, le signal spécifique à un élément binaire peut prendre la même valeur que la tension continue qui constitue le préambule, et le signal spécifique à l'élément binaire complémentaire peut prendre la même valeur que la tension continue qui constitue le postambule.

Préférentiellement les valeurs V3, V4 de la tension d'alimentation sont différentes de zéro ; de cette manière, l'entité d'alimentation et de communication peut assurer sa fonction d'alimentation électrique quels que soient la durée et le contenu de la transmission.

L'entité d'alimentation et de communication IMS peut générer, au cours d'une étape optionnelle de transition E170, une deuxième tension d'alimentation de transition Utr2 de forme d'onde et/ou d'amplitude prédéfinies pour assurer la transition entre le mode de fonctionnement communication et le mode exécution de commande. Un exemple d'une telle tension Utr2 est illustré par la figure 7 : à la fin de la transmission de la trame F1, la tension d'alimentation est maintenue à 0V pendant une durée T2, permettant ainsi l'établissement des conditions initiales optimisées pour le mode de fonctionnement suivant.

Un mode particulier de réalisation, mettant en oeuvre le mode de communication montante MODE_COMu, sera maintenant décrit en référence aux figures 1, 2a et 8.

Comme déjà mentionné, l'entité d'alimentation et de communication IMS, fournit à l'actionneur ACT un signal d'alimentation électrique lors d'une étape S10.

L'actionneur ACT constitue, vu de ses bornes a1, a2, une impédance de charge pour l'entité d'alimentation et de communication IMS.

Suite à la connexion des fils c1, c2, entre les bornes électriques a1, a2, de l'actionneur ACT et b1, b2, de l'entité d'alimentation et de communication IMS, un signal électrique s'établit en réponse : si l'alimentation électrique est fournie sous la forme d'un signal de tension U, ce signal est l'intensité du courant électrique I ; si l'alimentation électrique est fournie sous la forme d'un signal de courant i, ce signal est l'intensité de la tension u.

Le signal de réponse qui s'établit dépend d'une part du signal d'alimentation fourni par l'entité d'alimentation et de communication IMS et d'autre part de l'impédance de l'actionneur ACT. En effet, ce dernier, en provoquant une variation de son impédance Zact, crée une variation du signal de réponse et transmet ainsi une information à l'entité d'alimentation et de communication IMS.

La communication entre l'actionneur ACT et l'entité d'alimentation et de communication IMS se fait alors par l'envoi de données par l'actionneur ACT, sous forme d'une trame de données constituant au moins une partie du signal de réponse. La trame de données correspond préférentiellement à une suite d'éléments binaires, représentés par des variations du signal de réponse circulant sur les fils c1, c2.

L'entité d'alimentation et de communication IMS comprend des moyens de détection de courant, respectivement de tension. En utilisant des techniques connues par l'homme du métier, comme l'échantillonnage et la mémorisation, l'entité d'alimentation et de communication IMS peut déterminer les variations dans le temps du signal de réponse. Un ensemble des variations temporelles du signal de réponse durant une période temporelle est appelé dans la suite de ce document « séquence temporelle du signal de réponse ». La durée de la période temporelle est déterminée selon un critère partagé par l'actionneur ACT et l'entité d'alimentation et de communication IMS. Un tel critère peut être une durée prédéterminée ou le passage du signal de réponse, lors de ses variations, par des valeurs seuils prédéfinies, et éventuellement par des valeurs extrêmes entre ces valeurs seuils prédéfinies. Les deux critères peuvent être combinés pour délimiter une même séquence, comme sera expliqué par la suite.

Une séquence temporelle du signal de réponse peut être représentée par un premier graphique temporel. On appelle « image » d'une séquence temporelle tout ensemble de variations temporelles du signal de réponse pouvant être représenté par un deuxième graphique temporel identique ou sensiblement identique au premier graphique temporel.

Suite à l'établissement du signal d'alimentation, l'actionneur ACT génère, lors d'une étape S21, au moins une première séquence temporelle d'un signal de réponse en courant I, respectivement en tension u, représentative d'un premier élément binaire de calibration prédéterminé bCal, dite première séquence de calibration SeqCal.

Optionnellement, une deuxième séquence temporelle SeqCal2, représentative du deuxième élément binaire, peut être transmise par l'actionneur ACT; alternativement l'élément binaire complémentaire ou cette deuxième séquence peut être déduite de la première séquence de calibration SeqCal.

Le rôle de cette étape S21 est de transmettre à l'entité d'alimentation et de communication IMS les informations concernant l'encodage des données qui seront transmises par la suite. De cette manière l'encodage peut changer à chaque nouvelle connexion et/ou à chaque modification de conditions de transmission.

L'entité d'alimentation et de communication IMS détermine, lors d'une étape S11 au moins la première séquence de calibration SeqCal et lui attribue une signification de représentation de l'élément binaire de calibration prédéterminé bCal. Elle peut également au cours de cette étape S11 la représentation de l'élément binaire complémentaire.

Ensuite, l'actionneur ACT émet, au cours d'une étape S22, une trame de données, sous la forme d'une suite de séquences temporelles SeqDat du signal de réponse I, respectivement u, représentative d'une suite d'éléments binaires constituant la trame de données à émettre.

L'actionneur ACT génère, pour chaque élément binaire de données égal à l'élément binaire de calibration bCal, une séquence temporelle du signal de réponse image de la première séquence de calibration SeqCal. Un élément binaire de données complémentaire au bit de calibration bCal peut être représenté par une séquence temporelle du signal de réponse image de la deuxième séquence de calibration SeqCal2.

L'entité d'alimentation et de communication IMS détecte la suite de séquences temporelles SeqDat selon le ou les critères partagés, lors d'une étape S12. Ensuite ces séquences sont décodées par comparaison avec la ou les séquences de calibration SeqCal, SeqCal2 : une séquence SeqDat, image de la première séquence de calibration SeqCal, est interprétée comme un élément binaire égal à l'élément binaire de calibration bCal ; une séquence SeqDat, image de la deuxième séquence de calibration SeqCal2, est interprétée comme un élément binaire complémentaire à l'élément binaire de calibration bCal.

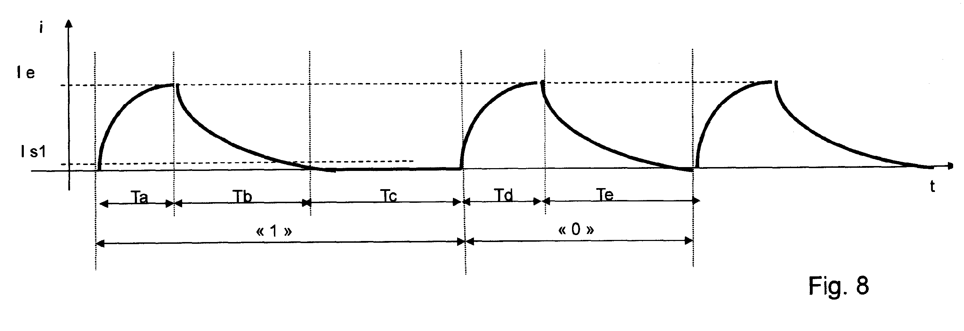

La génération des séquences temporelles SeqCal, SeqCal2, SeqDat, par l'actionneur ACT est maintenant décrite en référence aux figures 6 et 8.

Pendant le mode d'exécution de commande, le fonctionnement du moteur est contrôlé par des composants électroniques comme illustré de manière schématique par la figure 6.

Pendant le mode de communication montante, l'actionneur ACT utilise les composants électroniques, utilisés en mode exécution de commande pour le contrôle du moteur, de manière différente, c'est-à-dire pour configurer l'actionneur en tant qu'impédance de charge ayant des valeurs particulières.

En variant la configuration des composants électroniques, l'actionneur ACT peut varier l'impédance de charge Zact présentée à l'entité d'alimentation et de communication IMS ; de cette manière l'actionneur ACT peut générer des variations du signal de réponse en courant, respectivement en tension, à ces bornes a1, a2 et sur les fils c1, c2.

Dans l'exemple illustré, par la figure 8 l'actionneur ACT est alimenté en tension. Pour représenter un élément binaire donné, l'actionneur ACT génère des séquences temporelles du signal de réponse en courant I, en variant la configuration des commutateurs Ki selon une séquence spécifique à chaque élément binaire ; il en résulte une séquence temporelle de courant spécifique à chaque élément binaire.

Dans l'exemple illustré par la figure la génération de la première séquence de calibration SeqCal, représentative de l'élément binaire de calibration prédéfini bCal, valant par exemple « 1 », comprend une sous-étape de maintien d'une première configuration des commutateurs, assurant une impédance Za pendant une première durée Ta. Cette configuration permet la variation du signal de réponse en courant I, jusqu'à une valeur extrême, minimale ou maximale.

Ensuite une sous-étape de maintien d'une deuxième configuration des commutateurs, assurant une impédance Zb pendant une deuxième durée Tb, est exécutée. Cette deuxième configuration permet la recharge d'éléments capacitifs C de l'actionneur ACT, entraînant une décroissance du signal de réponse en courant I.

Une troisième sous-étape de maintien d'une troisième configuration des commutateurs, assure une impédance Zc pendant une troisième durée Tc. Cette configuration peut correspondre à un maintien d'un signal de réponse en courant I quasi-nul sur les fils c1, c2.

De la même manière, l'élément binaire complémentaire, valant par exemple « 0 », peut être représenté par une séquence de deux configurations des commutateurs assurant respectivement les impédances Zd, Ze pendant des durées Td, Te.

Les valeurs Zd, Td peuvent être égales à Za, Ta, et les valeurs Ze, Te peuvent être égales à Zb, Tb. La séquence temporelle constituant le bit de valeur « 0 » peut différer de la séquence temporelle constituant le bit de valeur « 1 » uniquement en ce qu'elle ne comprend pas de sous-étape de maintien d'une configuration des commutateurs, assurant l'impédance Zc pendant la durée Tc. En particulier, cette dernière configuration peut ne pas exister, soit Tc=0.

Les valeurs des temps Ta, Tb, Tc, Td, Te, peuvent être prédéterminées. Alternativement, les configurations correspondantes assurant les impédances Za, ..., Ze sont maintenues tant que le signal de réponse en courant I, sur les fils c1, c2 n'ont pas atteint des valeurs prédéterminées la, ..., le, respectivement ua, ..., uj.

Les deux méthodes peuvent être utilisées pour une même séquence : les durées Ta et Tb peuvent être déterminées en fonction du signal de réponse en courant I, respectivement en tension u ; la durée Tc peut être prédéterminée.

Par exemple, la durée Ta est la durée de variation du signal de réponse entre une première valeur seuil Is1, prédéfinie et une valeur extrême le; la durée Tb, est la durée de variation du signal de réponse entre la valeur extrême le, respectivement ue, et une deuxième valeur seuil Is2, us2 prédéfinie.

Dans un mode préféré de réalisation, la séquence temporelle représentative de l'élément binaire complémentaire peut être déduite de la première séquence de calibration SeqCal, par exemple par la suppression de la phase de maintien du courant à la valeur finale de l'impulsion envoyée pendant la durée Tc. Dans l'exemple illustré, les durées des impulsions représentatives des deux éléments binaires sont différentes.

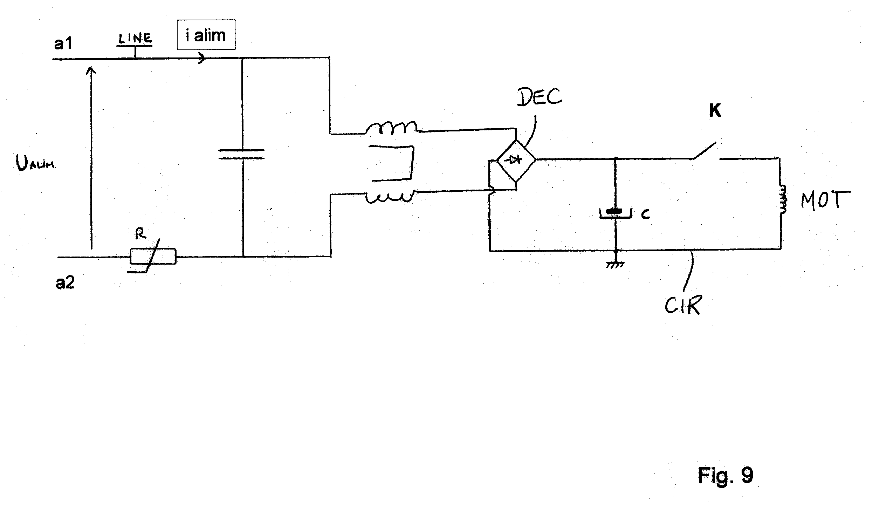

Un mode d'exécution particulier des procédés objets de l'invention est décrit ci-après en référence aux figures 9 à 12. Dans ce mode d'exécution particulier, l'actionneur ACT utilisé comprend en aval des bornes a1, a2, un élément de découplage DEC permettant dans certaines situations d'isoler un circuit CIR à impédance variable. L'élément de découplage comprend par exemple une diode ou un pont de diodes. Le circuit à impédance variable comprend au moins un élément par exemple un condensateur C en parallèle avec un montage série d'un interrupteur K et d'un élément résistif MOT comme un enroulement ou bobinage de moteur.

Dans ce mode d'exécution particulier, il est possible de mettre en oeuvre une communication montante particulière, c'est-à-dire une communication particulière de l'actionneur ACT vers l'entité d'alimentation et de communication. Cette communication est synchronisée sur le signal d'alimentation spécifique au mode de communication montante.

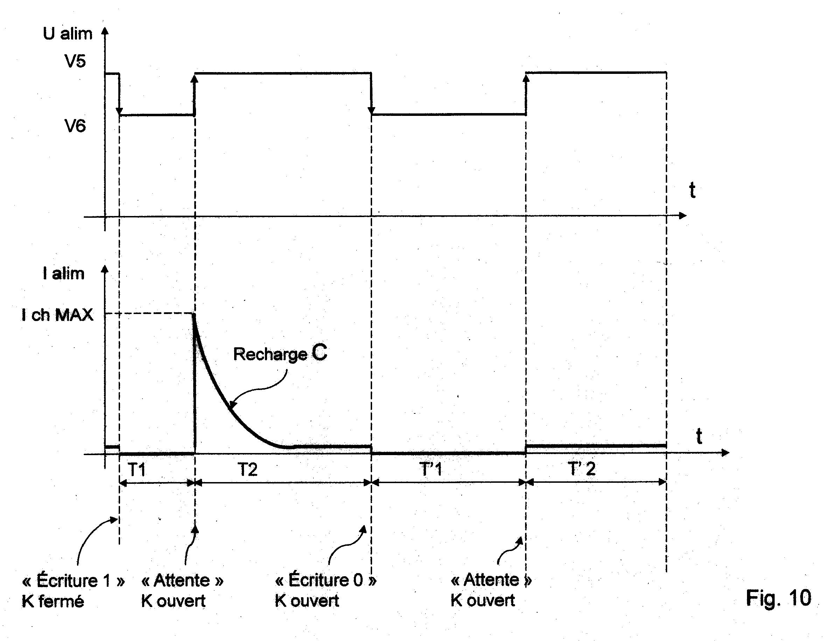

Dans une première étape, l'entité d'alimentation et de communication génère une variation d'un premier type du signal d'alimentation spécifique. Par exemple, sur la figure 10, cette variation est une chute brutale du signal d'alimentation Ualim d'une tension V5 à une tension inférieure V6.

Dans une deuxième étape, l'actionneur détecte la variation de premier type du signal d'alimentation spécifique. L'actionneur active alors l'élément de découplage DEC, isolant ainsi le circuit CIR des bornes a1, a2. Le découplage du circuit CIR peut être obtenu par le un passage à l'état activé de l'élément de découplage DEC suite à la variation de premier type du signal d'alimentation spécifique. Dans l'exemple illustré par la figure 10, la chute de tension de la valeur V5 à la valeur inférieure V6 provoque le passage à un état bloqué d'une diode. Il s'ensuit que le courant ialim devient nul.

L'actionneur met ensuite en place une première configuration du circuit CIR, en particulier de l'au moins un élément, associée à une première donnée ou une deuxième configuration du circuit CIR, en particulier de l'au moins un élément, associée à une deuxième donnée. On comprend que l'actionneur met en oeuvre la première configuration ou la deuxième configuration du circuit selon la nature de la donnée qu'il doit transmettre.

Cette configuration est maintenue pendant une période de durée T1 déterminée. A la fin de la période, l'actionneur revient de préférence à une configuration par défaut. Le maintien de cette configuration a des conséquences sur le circuit CIR. Dans l'exemple décrit, un maintien de l'interrupteur ouvert provoque un maintien de la tension aux bornes du condensateur C. Par contre, un maintien de l'interrupteur fermé provoque une diminution de la tension aux bornes du condensateur C, celui-ci se déchargeant dans l'élément résistif MOT. Dans l'exemple, la première configuration correspond à l'interrupteur K ouvert et la deuxième configuration correspond à l'interrupteur K fermé. Dans la deuxième étape représentée à la figure 10, l'interrupteur est maintenu fermé pendant la période de durée T1.

La première et la deuxième configurations du circuit CIR sont de nature à provoquer une première, respectivement une deuxième caractéristique du signal de réponse lors de la désactivation de l'élément de découplage DEC, comme il sera expliqué par la suite.

Dans une troisième étape, l'entité d'alimentation et de communication génère une variation d'un deuxième type du signal d'alimentation spécifique. Par exemple, sur la figure 10, cette variation est une augmentation brutale du signal d'alimentation Ualim de la tension V6 à la tension V5. Cette augmentation de tension provoque un passage à l'état désactivé de l'élément de découplage DEC, par exemple le passage à un état passant d'une diode. Il s'ensuit que le courant ialim devient non nul et prend des valeurs très différentes selon que le circuit CIR était en première configuration ou en deuxième configuration pendant la période de durée déterminée T1. Sur l'exemple de la figure 10, le circuit CIR était passé en deuxième configuration suite à la première variation de premier type du signal d'alimentation spécifique. Il s'ensuit que le condensateur C s'était déchargé dans l'élément résistif MOT. Aussi, suite à la première variation de deuxième type du signal d'alimentation spécifique, le signal de réponse ialim présente un pic d'intensité, l'énergie électrique étant utilisée pour recharger le condensateur C.

Dans une quatrième étape, l'entité d'alimentation et de communication génère une variation d'un premier type du signal d'alimentation spécifique. Par exemple, sur la figure 10, cette variation est une chute brutale du signal d'alimentation Ualim d'une tension V5 à une tension inférieure V6. Cette chute de tension provoque un passage à l'état activé de l'élément de découplage DEC, par exemple le passage à un état bloqué d'une diode. Il s'ensuit que le courant ialim devient nul.

Dans une sixième étape, l'actionneur détecte la variation de premier type du signal d'alimentation spécifique. L'actionneur met alors en place une première configuration du circuit, en particulier de l'au moins un élément, associée à une première donnée ou une deuxième configuration du circuit, en particulier de l'au moins un élément, associée à une deuxième donnée. On comprend que l'actionneur met en oeuvre la première configuration ou la deuxième configuration du circuit selon la nature de la donnée qu'il doit transmettre. Cette configuration est maintenue pendant une période de durée T1 déterminée. A la fin de la période, l'actionneur revient de préférence à une configuration par défaut. Le maintien de cette configuration a des conséquences sur le circuit CIR. Dans l'exemple décrit, un maintien de l'interrupteur ouvert provoque un maintien de la tension aux bornes du condensateur C. Par contre, un maintien de l'interrupteur fermé provoque une diminution de la tension aux bornes du condensateur C, celui-ci se déchargeant dans l'élément résistif MOT. Dans l'exemple, la première configuration correspond à l'interrupteur K ouvert et la deuxième configuration correspond à l'interrupteur K fermé. Dans la sixième étape représentée à la figure 10, l'interrupteur est maintenu ouvert pendant la période de durée T'1.

Suite aux variations de deuxième type du signal d'alimentation spécifique, l'élément de découplage DEC est désactivé, permettant ainsi au circuit CIR d'être à nouveau couplé à l'entité d'alimentation et de communication, et par conséquent à un signal de réponse d'être généré. L'entité d'alimentation et de communication analyse ensuite une caractéristique du signal de réponse, dans l'exemple l'intensité du courant du signal de réponse ialim. L'entité d'alimentation et de communication déduit de l'étape d'analyse précédente, une donnée associée à la caractéristique. Par exemple, une intensité ialim supérieure à un seuil déterminé traduit un état haut ou une donnée dont la valeur vaut 1 et une intensité ialim inférieure au seuil déterminé traduit un état bas ou une donnée dont la valeur vaut 0.

Deux variations de premier et deuxième type peuvent se compenser.

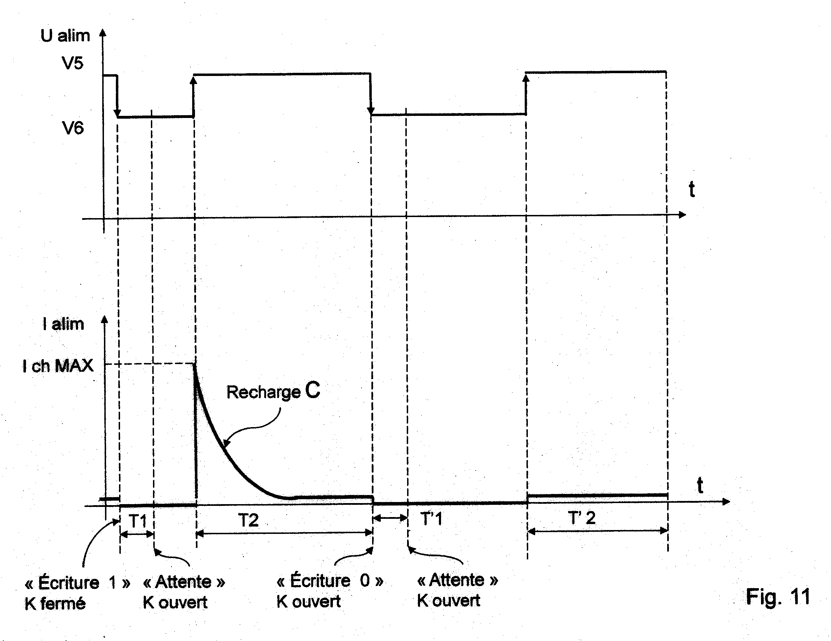

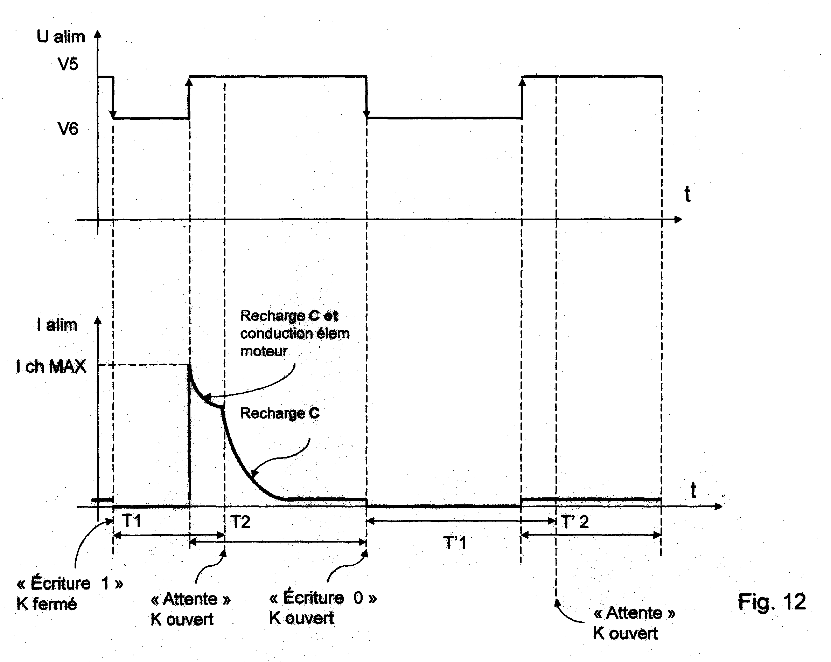

Deux variantes du procédé décrit ci-dessus sont illustrées aux figures 11 et 12.

La variante de la figure 11 diffère de la variante de la figure 10 en ce que les configurations du circuit CIR sont maintenues pendant des durées T1 et T'1 inférieures aux durées séparant des variations successives du signal d'alimentation spécifique.

La variante de la figure 12 diffère de la variante de la figure 10 en ce que les configurations du circuit CIR sont maintenues pendant des durées T1 et T'1 supérieures aux durées séparant des variations successives du signal d'alimentation spécifique.

Ainsi, dans le mode de fonctionnement décrit plus haut :
▪ La transmission d'information est synchronisée sur le signal d'alimentation spécifique (U alim, I alim)
▪ C'est l'entité d'alimentation et de communication (IMS) ayant la fonction de récepteur qui génère le signal spécifique pour piloter l'émission.
▪ Le signal d'alimentation spécifique (U alim, I alim) comporte au moins deux séquences distinctes
   ▪ une séquence d'écriture où l'actionneur est configuré pour l'émission d'une donnée ; et
   ▪ une séquence de lecture où l'entité d'alimentation et de communication reçoit et détecte la nature de la donnée.

L'élément de découplage peut aussi comprendre des relais ou des commutateurs électroniques (transistors C-MOS) commandés, suite à une détection de la séquence de début d'écriture. En configuration découplée, l'actionneur configure le circuit CIR, c'est-à-dire la partie découplée de l'électronique de l'actionneur, en fonction du bit ou de la nature de la donnée à écrire ou transmettre. En fonction de la valeur de l'impédance interne du circuit CIR, des conditions initiales (tension aux bornes du C) différentes sont établies. Ces conditions ne sont pas « visibles » par l'entité d'alimentation et de communication tant que l'élément de découplage est actif. Après détection d'un signal d'alimentation de « début de lecture », l'élément de découplage est désactivé. Ainsi, l'entité d'alimentation et de communication peut détecter les conditions électriques établies lors de la phase précédente.

## Revendications

1. Procédé de fonctionnement d'une entité d'alimentation et de communication (IMS) destinée à faire partie d'un système (SYS) avec au moins un actionneur (ACT) domotique comprenant un moteur électrique d'entraînement d'un élément mobile dans un bâtiment, l'entité d'alimentation et de communication (IMS) comprenant deux bornes électriques (b1, b2) de liaison à l'actionneur (ACT), permettant d'alimenter l'actionneur (ACT) et permettant la communication entre l'actionneur (ACT) et l'entité d'alimentation et de communication (IMS), le procédé comprenant deux modes de fonctionnement mutuellement exclusifs, un mode d'exécution de commande (MODE_EXEC) et un mode de communication (MODE_COMd, MODE_COMu), à chaque mode de fonctionnement correspondant un signal d'alimentation spécifique (Uexec, Ucomd, Ucomu, lexec, Icomd, Icomu), le procédé comprenant les étapes :
- choix (E110) d'un mode de fonctionnement,
- génération (E130) entre les bornes (b1, b2) d'un signal d'alimentation (Uexec, Ucomd, Ucomu, lexec, Icomd, Icomu) spécifique au mode de fonctionnement choisi (MODE_EXEC, MODE_COMu).

2. Procédé selon la revendication 1, **caractérisé en ce que** le signal d'alimentation spécifique au mode exécution de commande (Uexec) est une tension alternative et le signal d'alimentation spécifique au mode communication (Ucomd, Ucomu) est une tension continue.

3. Procédé selon la revendication 1, **caractérisé en ce que** le signal d'alimentation spécifique au mode exécution de commande (Uexec) est une tension continue ayant une première valeur (V1) et le signal d'alimentation spécifique au mode de communication (Ucomd, Ucomu) est une tension continue ayant une deuxième valeur (V2) différente.

4. Procédé selon l'une des revendications précédentes, **caractérisé en ce qu'**en mode de fonctionnement de communication descendante (MODE_COMd), le procédé comprend en outre une étape (E160) d'émission de données sous la forme d'une succession d'éléments binaires, chaque élément binaire étant représenté par la forme d'onde du signal d'alimentation et comprenant
- un préambule constitué par une tension continue ayant une troisième valeur (V3), puis
- un signal spécifique à chaque élément binaire, puis
- un postambule constitué par une tension continue ayant une quatrième valeur (V4) différente de la troisième valeur (V3).

5. Procédé selon l'une des revendications précédentes, **caractérisé en ce qu'**il comprend en outre une étape (E120) de transition entre le mode exécution de commande (MODE_EXEC) et le mode de communication (MODE_COMd, MODE_COMu) consistant à générer sur les bornes (b1, b2) un premier signal d'alimentation de transition (Utr1) de forme d'onde et d'amplitude prédéfinies.

6. Procédé selon l'une des revendications précédentes, **caractérisé en ce qu'**il comprend en outre une étape (E170) de transition entre le mode de communication (MODE_COMd, MODE_COMu) et le mode exécution de commande (MODE_EXEC) consistant à générer sur les bornes (b1, b2) un deuxième signal d'alimentation de transition (Utr2) de forme d'onde et d'amplitude prédéfinies.

7. Procédé selon l'une des revendications précédentes, **caractérisé en ce qu'**en mode de fonctionnement de communication montante (MODE_COMu), le procédé comprend :
- générer une variation d'un premier type du signal d'alimentation spécifique,
- générer une variation d'un deuxième type du signal d'alimentation spécifique,
- analyser une caractéristique d'un signal de réponse suite à la variation du deuxième type,
- déduire de l'étape d'analyse précédente, une donnée associée à la caractéristique.

8. Procédé selon la revendication 7, **caractérisé en ce que** le signal d'alimentation spécifique comprend des itérations de successions :
- d'une tension continue ayant une cinquième valeur (V5), et
- d'une tension continue ayant une sixième valeur (V6),
la variation de premier type permettant de passer de la cinquième valeur à la sixième valeur, et
la variation de deuxième type permettant de passer de la sixième valeur à la cinquième valeur.

9. Procédé de fonctionnement d'un actionneur (ACT) domotique comprenant un moteur électrique d'entraînement d'un élément mobile dans un bâtiment, l'actionneur (ACT) étant apte à faire partie d'un système (SYS) avec une entité d'alimentation et de communication (IMS), l'actionneur (ACT) comprenant deux bornes électriques (a1, a2) de liaison à l'entité d'alimentation et de communication (IMS) permettant d'alimenter l'actionneur (ACT) et permettant la communication entre l'actionneur (ACT) et l'entité d'alimentation et de communication (IMS),
le procédé comprenant deux modes de fonctionnement mutuellement exclusifs, un mode d'exécution de commande (MODE_EXEC) et un mode de communication (MODE_COMd, MODE_COMu), à chaque mode de fonctionnement correspondant un signal d'alimentation spécifique (Uexec, Ucomd, Ucomu, lexec, Icomd, Icomu), le procédé comprenant les étapes :
- détermination d'au moins une caractéristique (E210, E220) du signal d'alimentation ; et
- comparaison (E230) de la caractéristique du signal d'alimentation avec les caractéristiques des signaux d'alimentation (Uexec, Ucomd, Ucomu, lexec, Icomd, Icomu) spécifiques à chaque mode de fonctionnement (MODE_EXEC, MODE_COMu).

10. Procédé selon la revendication 9, **caractérisé en ce qu'**il comprend en outre une étape (E240, E250, E260) de détermination du mode de fonctionnement du système et une étape (E240, E250, E260) de configuration de l'actionneur (ACT) pour le mode de fonctionnement déterminé (MODE_EXEC, MODE_COMu) et **en ce que** l'étape de configuration de l'actionneur (ACT) pour le mode de fonctionnement choisi (MODE_EXEC, MODE_COMu) comprend une sous-étape (E245, E255, E265) de configuration de l'impédance (Zact) de l'actionneur(ACT).

11. Procédé selon l'une quelconque des revendications 9 à 10, **caractérisé en ce que** dans un mode de fonctionnement de communication descendante (MODE_COMd), le procédé comprend en outre une étape (E285) de réception de données sous la forme d'une succession d'éléments binaires, chaque élément binaire étant représenté par la forme d'onde du signal d'alimentation et comprenant
- un préambule constitué par une tension continue ayant une troisième valeur (V3) puis ;
- un signal_spécifique à chaque élément binaire ; puis
- un postambule constitué par une tension continue ayant une quatrième valeur (V4), différente de la troisième valeur (V3).

12. Procédé selon l'une quelconque des revendications 9 à 11, **caractérisé en ce que**, dans un mode de fonctionnement de communication montante (MODE_COMu), le procédé comprend :
- détecter une variation d'un premier type du signal d'alimentation spécifique,
- mettre en place une première configuration d'au moins un élément définissant une première impédance interne à un circuit (CIR) de l'actionneur et associée à une première donnée ou mettre en place une deuxième configuration de l'au moins un élément définissant une deuxième impédance interne au circuit (CIR) de l'actionneur et associée à une deuxième donnée,
- maintenir la situation configurée à l'étape précédente pendant une durée déterminée (T1, T1').

13. Procédé selon la revendication 12, **caractérisé en ce que** l'au moins un élément comprend un interrupteur, notamment un interrupteur en série avec un élément résistif, en particulier un ensemble comprenant un interrupteur (K) en série avec un élément résistif, le tout en parallèle d'un condensateur (C).

14. Entité d'alimentation et de communication (IMS) destinée à faire partie d'un système (SYS), avec au moins un actionneur (ACT) domotique comprenant un moteur électrique d'entraînement d'un élément mobile dans un bâtiment, l'entité d'alimentation et de communication (IMS) comprenant :
- deux bornes électriques (b1, b2) permettant d'alimenter l'actionneur (ACT) et permettant la communication entre l'actionneur (ACT) et l'entité d'alimentation et de communication (IMS) ;
- des moyens (10, 11, 12, 13) :
- de mise en oeuvre d'au moins deux modes de fonctionnement mutuellement exclusifs, un mode d'exécution de commande (MODE_EXEC) et un mode de communication (MODE_COMd, MODE_COMu), à chaque mode de fonctionnement correspondant un signal d'alimentation spécifique (Uexec, Ucomd, Ucomu, lexec, Icomd, Icomu) ; et
- de choix d'un mode de fonctionnement ;
- de génération entre les bornes électriques (b1, b2) d'un signal d'alimentation (Uexec, Ucomd, Ucomu, lexec, Icomd, Icomu) spécifique au mode de fonctionnement choisi (MODE_EXEC, MODE_COMu).

15. Actionneur (ACT) domotique comprenant un moteur électrique d'entraînement d'un élément mobile dans un bâtiment, l'actionneur (ACT) étant apte à être utilisé dans un système (SYS), avec une entité d'alimentation et de communication (IMS), l'actionneur (ACT) comprenant :
- deux bornes électriques (a1, a2) de liaison à l'entité d'alimentation et de communication (IMS) permettant d'alimenter l'actionneur (ACT) et permettant la communication entre l'actionneur (ACT) et l'entité d'alimentation et de communication (IMS) ;
- des moyens (20, 21, 22, 23)
- de mise en oeuvre d'au moins deux modes de fonctionnement mutuellement exclusifs, un mode d'exécution de commande (MODE_EXEC) et un mode de communication (MODE_COMd, MODE_COMu), à chaque mode de fonctionnement correspondant un signal d'alimentation spécifique (Uexec, Ucomd, Ucomu, lexec, Icomd, Icomu) ; et
- de détermination d'au moins une caractéristique du signal d'alimentation ; et
- de comparaison de la caractéristique du signal d'alimentation avec les caractéristiques des signaux d'alimentation (Uexec, Ucomd, Ucomu, lexec, Icomd, Icomu) spécifiques à chaque mode de fonctionnement (MODE_EXEC, MODE_COMu).

16. Système (SYS) comprenant au moins une entité d'alimentation et de communication (IMS) selon la revendication 14 et au moins un actionneur (ACT) selon la revendication 15.

## Patentansprüche

1. Verfahren zum Betreiben einer Versorgungs- und Kommunikationseinheit (IMS), die dazu bestimmt ist, Teil eines Systems (SYS) mit mindestens einem Haustechnikaktuator (ACT) zu sein, umfassend einen Elektromotor für den Antrieb eines mobilen Elements in einem Gebäude, wobei die Versorgungs- und Kommunikationseinheit (IMS) zwei elektrische Klemmen (b1, b2) zur Verbindung mit dem Aktuator (ACT) umfasst, die es ermöglichen, den Aktuator (ACT) zu versorgen, und die die Kommunikation zwischen dem Aktuator (ACT) und der Versorgungs- und Kommunikationseinheit (IMS) ermöglichen, wobei das Verfahren zwei einander wechselseitig ausschließende Betriebsmodi umfasst, einen Befehlsausführungsmodus (MODE_EXEC) und einen Kommunikationsmodus (MODE_COMd, MODE_COMu), wobei jedem Betriebsmodus ein spezifisches Versorgungssignal (Uexec, Ucomd, Ucomu, Iexec, Icomd, Icomu) entspricht, wobei das Verfahren die folgenden Schritte umfasst:
- Auswahl (E110) eines Betriebsmodus,
- Erzeugung (E130) zwischen den Klemmen (b1, b2) eines Versorgungssignals (Uexec, Ucomd, Ucomu, Iexec, Icomd, Icomu), das für den gewählten Betriebsmodus (MODE_EXEC, MODE_COMd, MODE_COMu) spezifisch ist.

2. Verfahren nach Anspruch 1, **dadurch gekennzeichnet, dass** das für den Befehlsausführungsmodus (Uexec) spezifische Versorgungssignal eine Wechselspannung ist, und das für den Kommunikationsmodus (Ucomd, Ucomu) spezifische Versorgungssignal eine Gleichspannung ist.

3. Verfahren nach Anspruch 1, **dadurch gekennzeichnet, dass** das für den Befehlsausführungsmodus (Uexec) spezifische Versorgungssignal eine Gleichspannung mit einem ersten Wert (V1) ist und das für den Kommunikationsmodus (Ucomd, Ucomu) spezifische Versorgungssignal eine Gleichspannung mit einem zweiten unterschiedlichen Wert (V2) ist.

4. Verfahren nach einem der vorhergehenden Ansprüche, **dadurch gekennzeichnet, dass** im absteigenden Kommunikationsbetriebsmodus (MODE_COMd) das Verfahren ferner einen Schritt (E160) des Sendens von Daten in Form einer Folge von binären Elementen umfasst, wobei jedes binäre Element durch die Wellenform des Versorgungssignals dargestellt ist, und umfassend:
- eine Präambel, die von einer Gleichspannung mit einem dritten Wert (V3) gebildet ist, dann
- ein für jedes binäre Element spezifisches Signal, dann
- eine Postambel, die von einer Gleichspannung mit einem vierten Wert (V4), der sich vom dritten Wert (V3) unterscheidet, gebildet ist.

5. Verfahren nach einem der vorhergehenden Ansprüche, **dadurch gekennzeichnet, dass** es ferner einen Schritt (E120) des Übergangs zwischen dem Befehlsausführungsmodus (MODE_EXEC) und dem Kommunikationsmodus (MODE_COMd, MODE_COMu) umfasst, der darin besteht, an den Klemmen (b1, b2) ein erstes Übergangsversorgungssignal (Utr1) mit einer vordefinierten Wellenform und Amplitude zu erzeugen.

6. Verfahren nach einem der vorhergehenden Ansprüche, **dadurch gekennzeichnet, dass** es ferner einen Übergangsschritt (E170) zwischen dem Kommunikationsmodus (MODE_COMd, MODE_COMu) und dem Befehlsausführungsmodus (MODE_EXEC) umfasst, der darin besteht, an den Klemmen (b1, b2) ein zweites Übergangsversorgungssignal (Utr2) mit einer vordefinierten Wellenform und Amplitude zu erzeugen.

7. Verfahren nach einem der vorhergehenden Ansprüche, **dadurch gekennzeichnet, dass** im aufsteigenden Kommunikationsbetriebsmodus (MODE_COMu) das Verfahren umfasst:
- Erzeugung einer Variation eines ersten Typs des spezifischen Versorgungssignals,
- Erzeugung einer Variation eines zweiten Typs des spezifischen Versorgungssignals,
- Analyse eines Merkmals eines Antwortsignals nach der Variation des zweiten Typs,
- von dem vorhergehenden Analyseschritt Ableiten eines dem Merkmal zugeordneten Datums.

8. Verfahren nach Anspruch 7, **dadurch gekennzeichnet, dass** das spezifische Versorgungssignal Iterationen von Folgen umfasst:
- einer Gleichspannung mit einem fünften Wert (V5), und
- einer Gleichspannung mit einem sechsten Wert (V6),
wobei es die Variation des ersten Typs ermöglicht, von dem fünften Wert auf den sechsten Wert überzugehen, und
wobei es die Variation des zweiten Typs ermöglicht, von dem sechsten Wert auf den fünften Wert überzugehen.

9. Verfahren zum Betreiben eines Haustechnikaktuators (ACT), umfassend einen Elektromotor für den Antrieb eines mobilen Elements in einem Gebäude, wobei der Aktuator (ACT) geeignet ist, Teil eines Systems (SYS) mit einer Versorgungs- und Kommunikationseinheit (IMS) zu sein, wobei der Aktuator (ACT) zwei elektrische Klemmen (a1, a2) zur Verbindung mit der Versorgungs- und Kommunikationseinheit (IMS) umfasst, die es ermöglichen, den Aktuator (ACT) zu versorgen, und die die Kommunikation zwischen dem Aktuator (ACT) und der Versorgungs- und Kommunikationseinheit (IMS) ermöglichen, wobei das Verfahren zwei einander wechselseitig ausschließende Betriebsmodi umfasst, einen Befehlsausführungsmodus (MODE_EXEC) und einen Kommunikationsmodus (MODE_COMd, MODE_COMu), wobei jedem Betriebsmodus ein spezifisches Versorgungssignal (Uexec, Ucomd, Ucomu, Iexec, Icomd, Icomu) entspricht, wobei das Verfahren die folgenden Schritte umfasst:
- Bestimmung mindestens eines Merkmals (E210, E220) des Versorgungssignals; und
- Vergleich (E230) des Merkmals des Versorgungssignals mit den Merkmalen der Versorgungssignale (Uexec, Ucomd, Ucomu, Iexec, Icomd, Icomu), die für jeden Betriebsmodus (MODE_EXEC, MODE_COMd, MODE_COMu) spezifisch sind.

10. Verfahren nach Anspruch 9, **dadurch gekennzeichnet, dass** es ferner einen Schritt (E240, E250, E260) zur Bestimmung des Betriebsmodus des Systems und einen Schritt (E240, E250, E260) zur Konfiguration des Aktuators (ACT) für den bestimmten Betriebsmodus (MODE_EXEC, MODE_COMd, MODE_COMu) umfasst, und dass der Schritt der Konfiguration des Aktuators (ACT) für den gewählten Betriebsmodus (MODE_EXEC, MODE_COMd, MODE_COMu) einen Unterschritt (E245, E255, E265) zur Konfiguration der Impedanz (Zact) des Aktuators (ACT) umfasst.

11. Verfahren nach einem der Ansprüche 9 bis 10, **dadurch gekennzeichnet, dass** bei einem absteigenden Kommunikationsbetriebsmodus (MODE_COMd) das Verfahren ferner einen Schritt (E285) des Empfangs von Daten in Form einer Folge von binären Elementen umfasst, wobei jedes binäre Element durch die Wellenform des Versorgungssignals dargestellt ist, und umfassend:
- eine Präambel, die von einer Gleichspannung mit einem dritten Wert (V3) gebildet ist, dann
- ein für jedes binäre Element spezifisches Signal, dann
- eine Postambel, die von einer Gleichspannung mit einem vierten Wert (V4), der sich vom dritten Wert (V3) unterscheidet, gebildet ist.

12. Verfahren nach einem der Ansprüche 9 bis 11, **dadurch gekennzeichnet, dass** bei einem aufsteigenden Kommunikationsbetriebsmodus (MODE_COMu) das Verfahren umfasst:
- Erfassung einer Variation eines ersten Typs des spezifischen Versorgungssignals,
- Einrichtung einer ersten Konfiguration mindestens eines Elements, das eine erste Impedanz innerhalb einer Schaltung (CIR) des Aktuators definiert, die einem ersten Datum zugeordnet ist, oder Einrichtung einer zweiten Konfiguration mindestens eines Elements, das eine zweite Impedanz innerhalb der Schaltung (CIR) des Aktuators definiert, die einem zweiten Datum zugeordnet ist,
- Aufrechterhaltung der im vorhergehenden Schritt konfigurierten Situation während einer bestimmten Dauer (T1, T1`).

13. Verfahren nach Anspruch 12, **dadurch gekennzeichnet, dass** das mindestens eine Element einen Schalter, insbesondere einen Schalter in Serie mit einem Widerstandselement, insbesondere eine Einheit, umfassend einen Schalter (K) in Serie mit einem Widerstandselement, umfasst, wobei diese mit einem Kondensator (C) parallel geschaltet sind.

14. Versorgungs- und Kommunikationseinheit (IMS), die dazu bestimmt ist, Teil eines Systems (SYS) mit mindestens einem Haustechnikaktuator (ACT) zu sein, umfassend einen Elektromotor für den Antrieb eines mobilen Elements in einem Gebäude, wobei die Versorgungs- und Kommunikationseinheit (IMS) umfasst:
- zwei elektrische Klemmen (b1, b2), die es ermöglichen, den Aktuator (ACT) zu versorgen, und die die Kommunikation zwischen dem Aktuator (ACT) und der Versorgungs- und Kommunikationseinheit (IMS) ermöglichen;
- Mittel (10, 11, 12, 13):
- für den Einsatz von mindestens zwei einander wechselseitig ausschließenden Betriebsmodi, eines Befehlsausführungsmodus (MODE_EXEC) und eines Kommunikationsmodus (MODE_COMd, MODE_COMu), wobei jedem Betriebsmodus ein spezifisches Versorgungssignal (Uexec, Ucomd, Ucomu, Iexec, Icomd, Icomu) entspricht;
- zur Auswahl eines Betriebsmodus,
- zur Erzeugung zwischen den Klemmen (b1, b2) eines Versorgungssignals (Uexec, Ucomd, Ucomu, Iexec, Icomd, Icomu), das für den gewählten Betriebsmodus (MODE_EXEC, MODE_COMd, MODE_COMu) spezifisch ist.

15. Haustechnikaktuator (ACT), umfassend einen Elektromotor für den Antrieb eines mobilen Elements in einem Gebäude, wobei der Aktuator (ACT) geeignet ist, in einem System (SYS) mit einer Versorgungs- und Kommunikationseinheit (IMS) verwendet zu werden, wobei der Aktuator (ACT) umfasst:
- zwei elektrische Klemmen (a1, a2) zur Verbindung mit der Versorgungs- und Kommunikationseinheit (IMS), die es ermöglichen, den Aktuator (ACT) zu versorgen, und die die Kommunikation zwischen dem Aktuator (ACT) und der Versorgungs- und Kommunikationseinheit (IMS) ermöglichen,
- Mittel (20, 21, 22, 23)
- für den Einsatz von mindestens zwei einander wechselseitig ausschließenden Betriebsmodi, eines Befehlsausführungsmodus (MODE_EXEC) und eines Kommunikationsmodus (MODE_COMd, MODE_COMu), wobei jedem Betriebsmodus ein spezifisches Versorgungssignal (Uexec, Ucomd, Ucomu, Iexec, Icomd, Icomu) entspricht; und
- zur Bestimmung mindestens eines Merkmals des Versorgungssignals; und
- zum Vergleich des Merkmals des Versorgungssignals mit den Merkmalen der Versorgungssignale (Uexec, Ucomd, Ucomu, Iexec, Icomd, Icomu), die für jeden Betriebsmodus (MODE_EXEC, MODE_COMd, MODE_COMu) spezifisch sind.

16. System (SYS), umfassend mindestens eine Versorgungs- und Kommunikationseinheit (IMS) nach Anspruch 14 und mindestens einen Aktuator (ACT) nach Anspruch 15.

## Claims

1. Method of operating a power supply and communication entity (IMS) intended to form part of a system (SYS) with at least one home-automation actuator (ACT) comprising an electric motor for driving a movable element in a building, the power supply and communication entity (IMS) comprising two electrical terminals (b1, b2) for linking to the actuator (ACT), making it possible to power the actuator (ACT) and allowing communication between the actuator (ACT) and the power supply and communication entity (IMS), the method comprising two mutually exclusive modes of operation, a command execution mode (MODE_EXEC) and a communication mode (MODE_COMd, MODE_COMu), to each mode of operation there corresponding a specific power supply signal (Uexec, Ucomd, Ucomu, lexec, Icomd, Icomu), the method comprising the steps:
- choice (E110) of a mode of operation,
- generation (E130) between the terminals (b1, b2) of a power supply signal (Uexec, Ucomd, Ucomu, lexec, Icomd, Icomu) specific to the mode of operation chosen (MODE_EXEC, MODE_COMd, MODE_COMu).

2. Method according to Claim 1, **characterized in that** the power supply signal specific to the command execution mode (Uexec) is an AC voltage and the power supply signal specific to the communication mode (Ucomd, Ucomu) is a DC voltage.

3. Method according to Claim 1, **characterized in that** the power supply signal specific to the command execution mode (Uexec) is a DC voltage having a first value (V1) and the power supply signal specific to the communication mode (Ucomd, Ucomu) is a DC voltage having a second different value (V2).

4. Method according to one of the preceding claims, **characterized in that** in downlink communication operating mode (MODE_COMd), the method furthermore comprises a step (E160) of sending data in the form of a succession of binary elements, each binary element being represented by the waveform of the power supply signal and comprising
- a preamble consisting of a DC voltage having a third value (V3), and then
- a signal specific to each binary element, and then
- a postamble consisting of a DC voltage having a fourth value (V4) different from the third value (V3).

5. Method according to one of the preceding claims, **characterized in that** it furthermore comprises a step (E120) of transition between the command execution mode (MODE_EXEC) and the communication mode (MODE_COMd, MODE_COMu) consisting in generating on the terminals (b1, b2) a first transient power supply signal (Utr1) of predefined waveform and predefined amplitude.

6. Method according to one of the preceding claims, **characterized in that** it furthermore comprises a step (E170) of transition between the communication mode (MODE_COMd, MODE_COMu) and the command execution mode (MODE_EXEC) consisting in generating on the terminals (b1, b2) a second transient power supply signal (Utr2) of predefined waveform and predefined amplitude.

7. Method according to one of the preceding claims, **characterized in that** in uplink communication operating mode (MODE_COMu), the method comprises:
- generating a variation of a first type of the specific power supply signal,
- generating a variation of a second type of the specific power supply signal,
- analysing a characteristic of a response signal subsequent to the variation of the second type,
- deducing from the previous analysis step, a datum associated with the characteristic.

8. Method according to Claim 7, **characterized in that** the specific power supply signal comprises iterations of successions:
- of a DC voltage having a fifth value (V5), and
- of a DC voltage having a sixth value (V6),
the variation of first type making it possible to pass from the fifth value to the sixth value, and
the variation of second type making it possible to pass from the sixth value to the fifth value.

9. Method of operating a home-automation actuator (ACT) comprising an electric motor for driving a movable element in a building, the actuator (ACT) being able to form part of a system (SYS) with a power supply and communication entity (IMS), the actuator (ACT) comprising two electrical terminals (a1, a2) for linking to the power supply and communication entity (IMS) making it possible to power the actuator (ACT) and allowing communication between the actuator (ACT) and the power supply and communication entity (IMS),
the method comprising two mutually exclusive modes of operation, a command execution mode (MODE_EXEC) and a communication mode (MODE_COMd, MODE_COMu), to each mode of operation there corresponding a specific power supply signal (Uexec, Ucomd, Ucomu, lexec, Icomd, Icomu), the method comprising the steps:
- determination of at least one characteristic (E210, E220) of the power supply signal; and
- comparison (E230) of the characteristic of the power supply signal with the characteristics of the power supply signals (Uexec, Ucomd, Ucomu, lexec, Icomd, Icomu) specific to each mode of operation (MODE_EXEC, MODE_COMd, MODE_COMu).

10. Method according to Claim 9, **characterized in that** it furthermore comprises a step (E240, E250, E260) of determining the mode of operation of the system and a step (E240, E250, E260) of configuring the actuator (ACT) for the mode of operation determined (MODE_EXEC, MODE_COMd, MODE_COMu) and in **in that** the step of configuring the actuator (ACT) for the mode of operation chosen (MODE_EXEC, MODE_COMd, MODE_COMu) comprises a sub-step (E245, E255, E265) of configuring the impedance (Zact) of the actuator (ACT).

11. Method according to any one of Claims 9 to 10, **characterized in that** in a downlink communication operating mode (MODE_COMd), the method furthermore comprises a step (E285) of receiving data in the form of a succession of binary elements, each binary element being represented by the waveform of the power supply signal and comprising
- a preamble consisting of a DC voltage having a third value (V3) and then;
- a signal specific to each binary element; and then
- a postamble consisting of a DC voltage having a fourth value (V4), different from the third value (V3).

12. Method according to any one of Claims 9 to 11, **characterized in that**, in an up communication operating mode (MODE_COMu), the method comprises:
- detecting a variation of a first type of the specific power supply signal,
- bringing about a first configuration of at least one element defining a first impedance internal to a circuit (CIR) of the actuator and associated with a first datum or bringing about a second configuration of the at least one element defining a second impedance internal to the circuit (CIR) of the actuator and associated with a second datum,
- maintaining the situation configured in the previous step for a determined duration (T1, T1').

13. Method according to Claim 12, **characterized in that** the at least one element comprises a switch, notably a switch in series with a resistive element, in particular an assembly comprising a switch (K) in series with a resistive element, the whole in parallel with a capacitor (C).

14. Power supply and communication entity (IMS) intended to form part of a system (SYS), with at least one home-automation actuator (ACT) comprising an electric motor for driving a movable element in a building, the power supply and communication entity (IMS) comprising:
- two electrical terminals (b1, b2) making it possible to power the actuator (ACT) and allowing communication between the actuator (ACT) and the power supply and communication entity (IMS);
- means (10, 11, 12, 13):
- for implementing at least two mutually exclusive modes of operation, a command execution mode (MODE_EXEC) and a communication mode (MODE_COMd, MODE_COMu), to each mode of operation there corresponding a specific power supply signal (Uexec, Ucomd, Ucomu, lexec, Icomd, Icomu); and
- for choosing a mode of operation;
- for generating between the electrical terminals (b1, b2) a power supply signal (Uexec, Ucomd, Ucomu, lexec, Icomd, Icomu) specific to the mode of operation chosen (MODE_EXEC, MODE_COMd, MODE_COMu).

15. Home-automation actuator (ACT) comprising an electric motor for driving a movable element in a building, the actuator (ACT) being able to be used in a system (SYS), with a power supply and communication entity (IMS), the actuator (ACT) comprising:
- two electrical terminals (a1, a2) for linking to the power supply and communication entity (IMS) making it possible to power the actuator (ACT) and allowing communication between the actuator (ACT) and the power supply and communication entity (IMS);
- means (20, 21, 22, 23)
- for implementing at least two mutually exclusive modes of operation, a command execution mode (MODE_EXEC) and a communication mode (MODE_COMd, MODE_COMu), to each mode of operation there corresponding a specific power supply signal (Uexec, Ucomd, Ucomu, lexec, Icomd, Icomu); and
- for determining at least one characteristic of the power supply signal; and
- for comparing the characteristic of the power supply signal with the characteristics of the power supply signals (Uexec, Ucomd, Ucomu, lexec, Icomd, Icomu) specific to each mode of operation (MODE_EXEC, MODE_COMd, MODE_COMu).

16. System (SYS) comprising at least one power supply and communication entity (IMS) according to Claim 14 and at least one actuator (ACT) according to Claim 15.
